# EUROPEAN PATENT SPECIFICATION

(11) **EP 2 014 536 B1**
(45) Date of publication and mention of the grant of the patent: **19.08.2009**
(21) Application number: 07013781.5
(22) Date of filing: 13.07.2007
(51) Int. Cl.: B62B 7/08

(54) **Foldable toy stroller**
Zusammenklappbarer Spielzeugwagen
Poussette pliable en jouet

(43) Date of publication of application: 14.01.2009
(73) Proprietor: Huang, Ming-Tai, Taipei (TW)
(72) Inventor: Huang, Ming-Tai, Taipei (TW)
(74) Representative: Metz, Paul

(56) References cited:
- EP-A- 1 466 810
- US-A- 5 558 357

## Description

The present invention relates to a toy stroller and, more particularly, to a foldable three-wheel toy stroller.

Strollers for carrying babies or toy strollers for carrying dolls generally include two handles, a frame, and wheels. To allow easy carriage or storage when not in use, the frame generally includes joints that are pivotable to allow folding and that can be locked when folded or extended. The frames of toy strollers are generally folded in the front/rear direction in which the front and rear wheels are adjacent to each other after folding. Document EP 1 466 810 represents the closest prior art and discloses a foldable stroller with
- two main rods (11,12) each including an upper end and a lower end;
- a front-wheel base (13) including two ends;
- two extension rods each including an upper end mounted to the lower end of one of the main rods (11,12) and a lower end rotatably connected to one of the ends of the front-wheel base (13);
- a central rod (30) including a first end connected to the front-wheel base (13) and a second end;
- a sliding seat (21) slidably mounted on the central rod (30);
- two rear wheel support rods (26,27) each including a first (28,29) end pivotably connected to the front wheel base (13) and a second end to which a rear wheel (24) is mounted;
- two struts (19,20) each including an upper end pivotably connected to the upper end of one of the main rods (11,12) and a lower end pivotably connected to the sliding seat (21);
- two connecting rods (22,23) each including a first end pivotably connected to one of the rear wheel support rods (26,27) and a second end pivotably connected to the sliding seat (21), with each of the rear wheel support rods (26,27) and the connecting rods (22,23) being pivotable away from the central rod (30) for unfolding the foldable toy stroller or toward the central rod (30) for folding the foldable toy stroller.
However, it is difficult to minimize the folded volumes of four-wheel toy strollers foldable in the front/rear direction, which is inconvenient to storage and transport. In addition to weak structure, the frames of currently available three-wheel toy strollers can not allow easy folding operation while occupying a larger space after folding.

It is therefore a need in a foldable frame for a toy stroller that can be folded to a minimized volume for easy storage and transport.

The present invention solves this need and other problems in the field of foldable frames for toy strollers by providing, in a preferred form, a foldable stroller including two main rods and two extension rods each having an upper end mounted to a lower end of one of the main rods and a lower end rotatably mounted to an end of a front-wheel base to which a front wheel is mounted. A central rod includes a first end connected to the front-wheel base and a second end to which a locking member is mounted. A sliding seat is slideably mounted on the central rod and includes a positioning hole for receiving a locking portion of the locking member. Two rear wheel support rods are provided and each include a first end pivotably connected to the front wheel base and a second end to which a rear wheel is mounted. Pivotably connected to the sliding seat are two struts whose upper ends are pivotably connected to upper ends of the main rods. Two connecting rods are pivotably connected between the rear wheel support rods and the sliding seat. Each rear wheel support rod and each connecting rod are pivotable away from the central rod for unfolding the foldable toy stroller or toward the central rod for folding the foldable toy stroller.

The locking portion of the locking member is engaged in the positioning hole of the sliding seat when the foldable toy stroller is in an extended state. The struts are away from the central rod and stretch the main rods upward. The connecting rods are away from the central rod and stretch the rear wheel support rods outward away from the central rod.

The sliding seat is slidable on the central rod when the locking portion of the locking member is disengaged from the positioning hole of the sliding seat, allowing the main rods, the rear wheel support rods, the struts, and the connecting rods to pivot toward the central rod for folding the foldable toy stroller.

In the most preferred form, the sliding seat includes four connecting portions to which the lower ends of the struts and the second ends of the connecting rods are pivotably connected. The sliding seat includes a longitudinal hole that slideably receives the central rod. The positioning hole of the sliding seat is in communication with and transverse to the longitudinal hole. The sliding seat further includes a guiding groove extending parallel to the longitudinal hole and in communication with the positioning hole. The locking portion is slideable in the guiding groove when the sliding seat is slideable on the central rod. A spring is mounted in the central rod for biasing the locking portion and an engaging portion of the locking member to respectively engage with the positioning hole of the sliding seat and an engaging hole of a handle mounted on the central rod. A push button is received in the engaging hole of the handle and can be pressed to disengage the engaging portion of the locking member from the engaging hole of the handle and to disengage the locking portion of the locking member from the positioning hole of the sliding seat to allow sliding movement of the sliding seat along the central rod. A front wheel is attached to a vertical portion extending downward from an intermediate portion between the ends of the front-wheel base. A horizontal portion extends horizontally from the intermediate portion and includes an end to which a coupler is mounted. The first end of the central rod is coupled to the coupler. The coupler further includes two pairs of lugs on an outer periphery thereof, and the front end of each rear wheel support rod is pivotably received between a pair of lugs. A stud extends outward from an end face of each end of the front-wheel base an acute angle with a longitudinal axis of the central rod. The lower end of each extension rod includes an eccentric hole parallel to and spaced from a central portion thereof. Each stud rotatably extends through the eccentric hole of the lower end of one of the extension rods.

The present invention will become clearer in light of the following detailed description of an illustrative embodiment of this invention described in connection with the drawings.

The illustrative embodiment may best be described by reference to the accompanying drawings where:

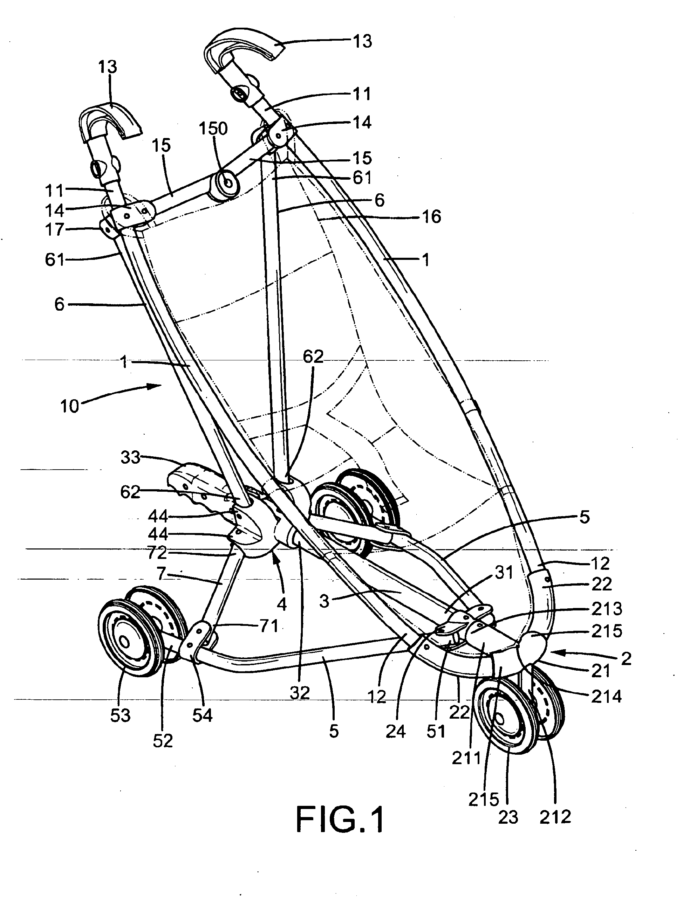

FIG. 1 shows a perspective view of a foldable toy stroller according to the preferred teachings of the present invention with the foldable toy stroller in an extended state.
FIG. 2 shows a side view of the foldable toy stroller of FIG. 1.

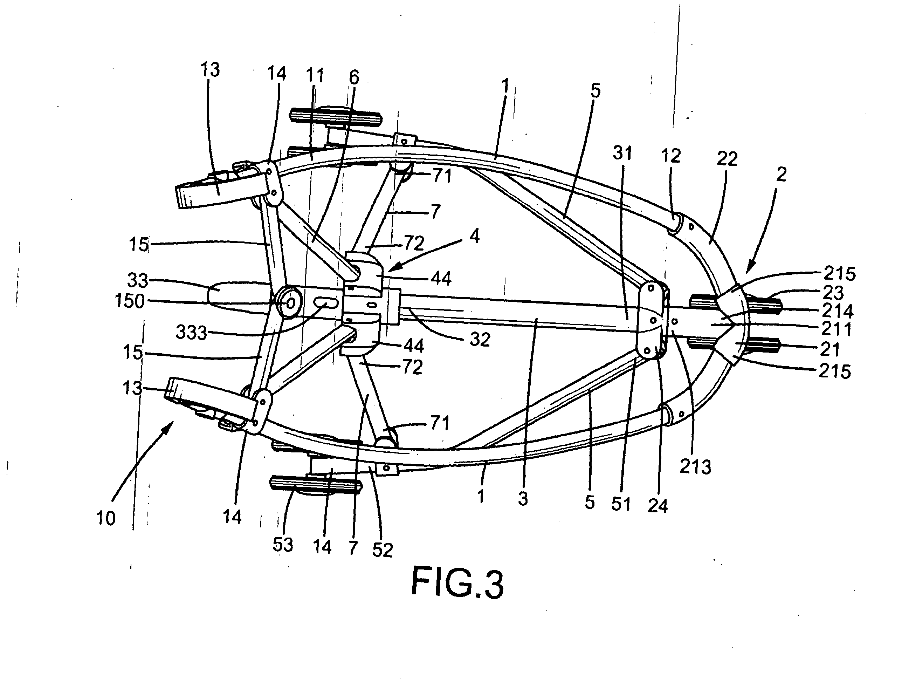

FIG. 3 shows a top view of the foldable toy stroller of FIG. 1
FIG. 4 shows an exploded perspective view of a front portion of the foldable toy stroller of FIG. 1.

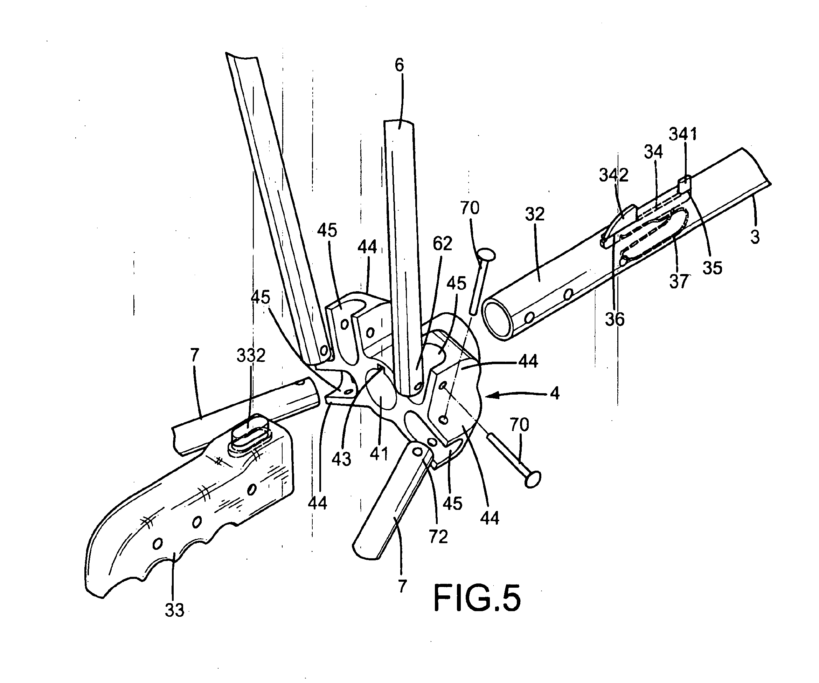

FIG.5 shows an exploded perspective view of a sliding seat and corresponding components of the foldable toy stroller of FIG. 1.

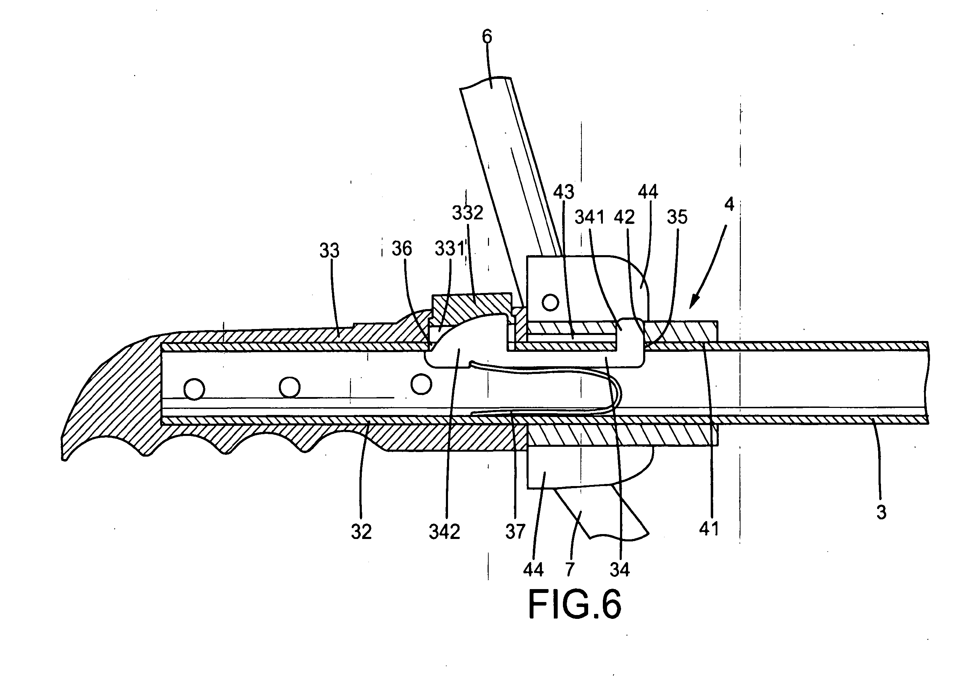

FIG. 6 shows a cross sectional view of the sliding seat and the components of FIG. 5 after assembly.
FIG. 7 shows a cross sectional view of the sliding seat and the components of FIG. 5 with a push button pressed and with the sliding seat moved forward.

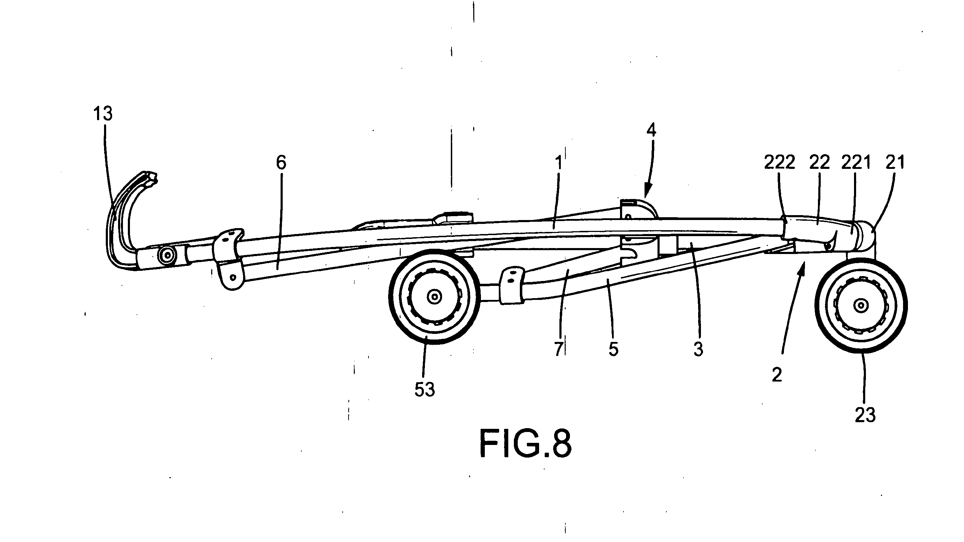

FIG. 8 shows a side view of the foldable toy stroller of FIG. 1 after folding.

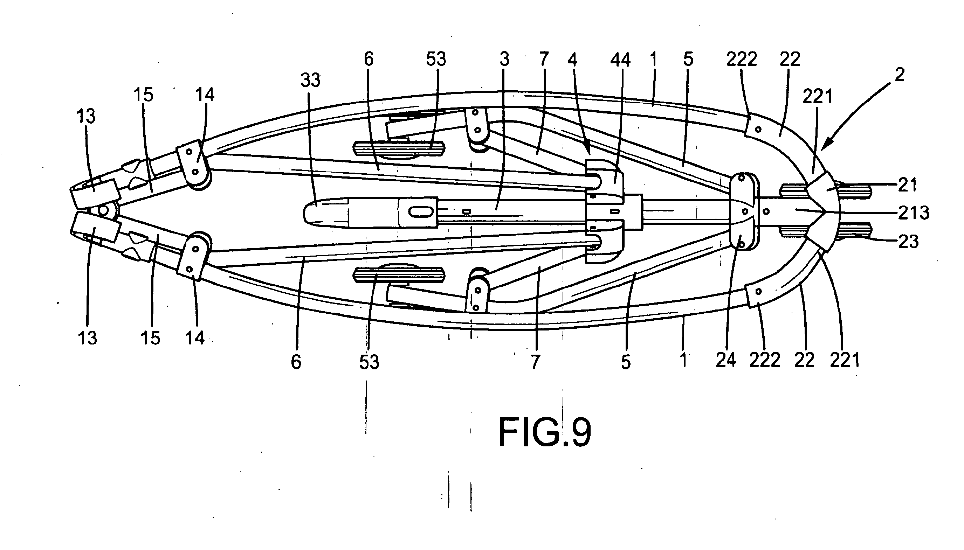

FIG. 9 shows a top view of the foldable toy stroller of FIG. 8.

All figures are drawn for ease of explanation of the basic teachings of the present invention only; the extensions of the Figures with respect to number, position, relationship, and dimensions of the parts to form the preferred embodiment will be explained or will be within the skill of the art after the following teachings of the present invention have been read and understood. Further, the exact dimensions and dimensional proportions to conform to specific force, weight, strength, and similar requirements will likewise be within the skill of the art after the following teachings of the present invention have been read and understood.

Where used in the various figures of the drawings, the same numerals designate the same or similar parts. Furthermore, when the terms "first", "second", "lower", "upper", "front", "rear", "inner", "outer", "end", "portion", "horizontal", "vertical", "inward", "outward", "longitudinal", "transverse", "width", "height", and similar terms are used herein, it should be understood that these terms have reference only to the structure shown in the drawings as it would appear to a person viewing the drawings and are utilized only to facilitate describing the invention.

A foldable toy stroller according to the preferred teachings of the present invention is shown in the drawings and generally designated 10. The foldable toy stroller 10 includes a pair of main rods 1 to which a piece of cloth 16 is attached for providing a seat and a backrest for a doll or a baby. A handgrip 13 is mounted to an upper end 11 of each main rod 1. Also mounted to the upper end 11 of each main rod 1 and below the handgrip 13 is a coupler 14. A pair of links 5 is mounted between the couplers 14. Inner ends of the links 5 are pivotably connected together and pivotable about a pivot axis 150. Outer ends of the links 5 are respectively and pivotably connected to the couplers 14. The links 5 are substantially in the same line when the foldable toy stroller 10 is in its extended state.

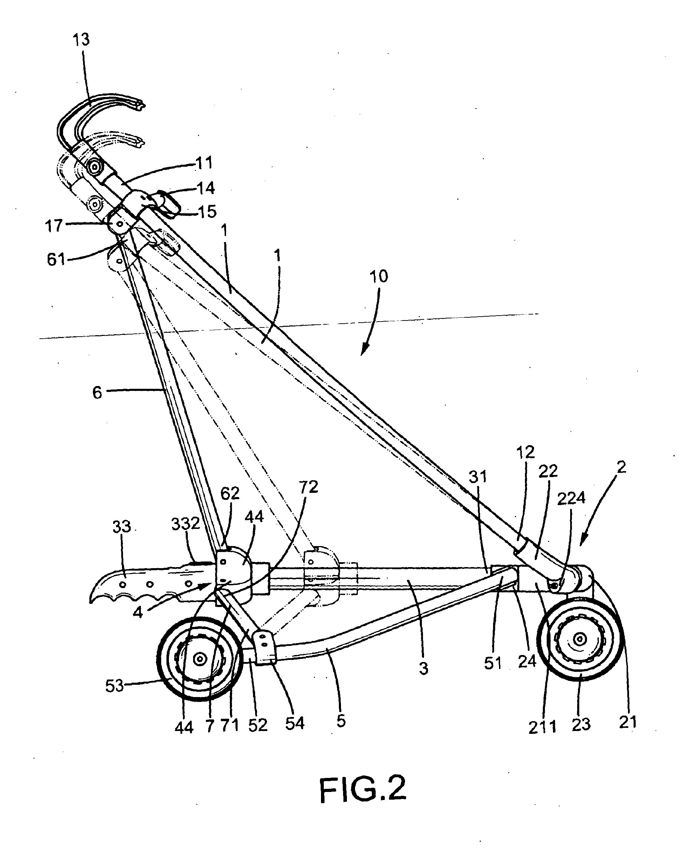

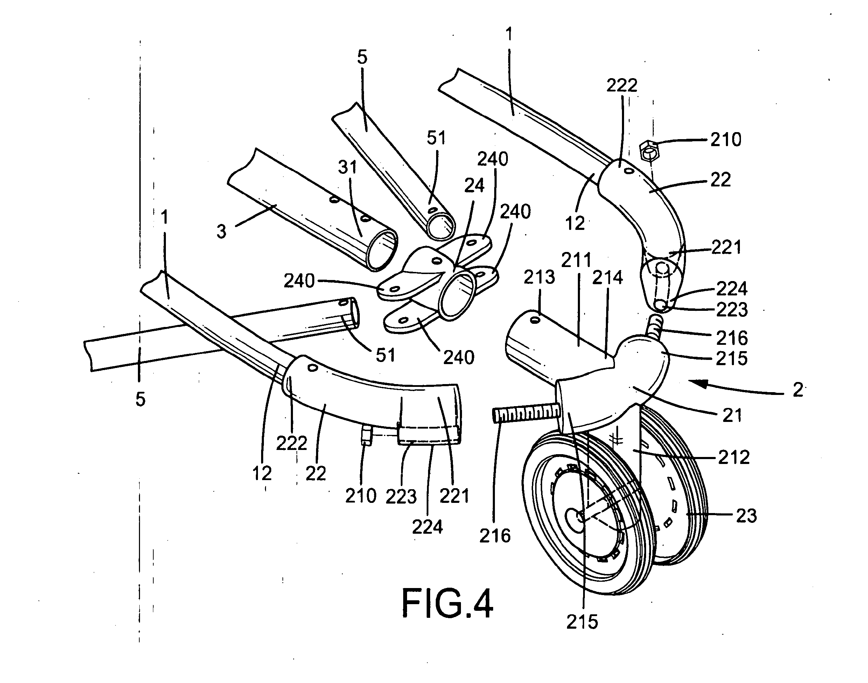

According to the preferred form, the foldable toy stroller 10 further includes a linking device 2. The linking device 2 includes a front-wheel base 21 and two substantially arc-shaped extension rods 22 respectively on two ends 215 of the front-wheel base 21. A horizontal portion 211 extends horizontally from an intermediate portion of the front-wheel base 21. Specifically, the horizontal portion 211 has a first end 213 and a second end 214 coupled to the front-wheel base 21. A vertical portion 212 extends downward from the intermediate portion of the front-wheel base 21, and a front wheel 23 is attached to a lower end of the vertical portion 212. Each extension rod 22 includes a lower end 221 pivotably connected to one of the ends 215 of the front-wheel base 21. Each extension rod 22 further includes an upper end 222 fixed to a lower end 12 of one of the main rods 1. Thus, the main rods 1 and the extension rods 22 can pivot relative to the front-wheel base 21 (see FIG. 2). In the most preferred form shown, a stud 216 is formed on an end face of each end 215 of the front-wheel base 21. The stud 216 defines a pivot axis in an acute angle with a longitudinal axis of the central rod 3. The lower end 221 of each extension rod 22 includes a protrusion 224 on an outer periphery thereof. The protrusion 224 includes an eccentric through-hole 223 (see FIG. 4) extending in a direction parallel to and spaced from a central portion of the extension rod 22 and rotatably receiving one of the studs 216, and a nut 210 is coupled with the stud 216 for retaining the extension rod 22 while allowing rotational movement of the associated extension rod 22 and the associated main rod 1 about the pivot axis defined by the stud 216. This allows the main rods 1 and the extension rods 22 to move relative to the front-wheel base 21 between an extended position having a larger acute angle with the front-wheel base 21 and a folded position having a small acute angle or substantially coplanar with the front-wheel base 21.

The central rod 3 includes a first end 31 fixed to the first end 213 of the horizontal extension 211 and a second end 32 to which a handle 33 is mounted. In the preferred form shown, a coupler 24 is provided between the first end 31 of the central rod 3 and the first end 213 of the horizontal extension 211. Two pairs of lugs 240 are formed on an outer periphery of the coupler 24. The second end 32 of the central rod 3 includes a first slot 35 and a second slot 36. A locking member 34 is slideably mounted in the second end 32 of the central rod 3 in a direction perpendicular to the longitudinal axis of the central rod 3. The locking member 34 includes a locking portion 341 slideably extending through the first slot 35 and an engaging portion 342 slideably extending through the second slot 36. A spring 37 is mounted in the second end 32 of the central rod 3 for biasing the locking portion 341 and the engaging portion 342 of the locking member 34 to their protruded positions outside the central rod 3. The handle 33 includes an engaging hole 331 for receiving the engaging portion 342 of the locking member 34. A push button 332 is slideably received in the engaging hole 331 and operatively connected to the engaging portion 342 of the locking member 34. The engaging portion 342 of the locking member 34 is received in the engaging hole 331 of the handle 33 to couple the handle 33 to the central rod 3.

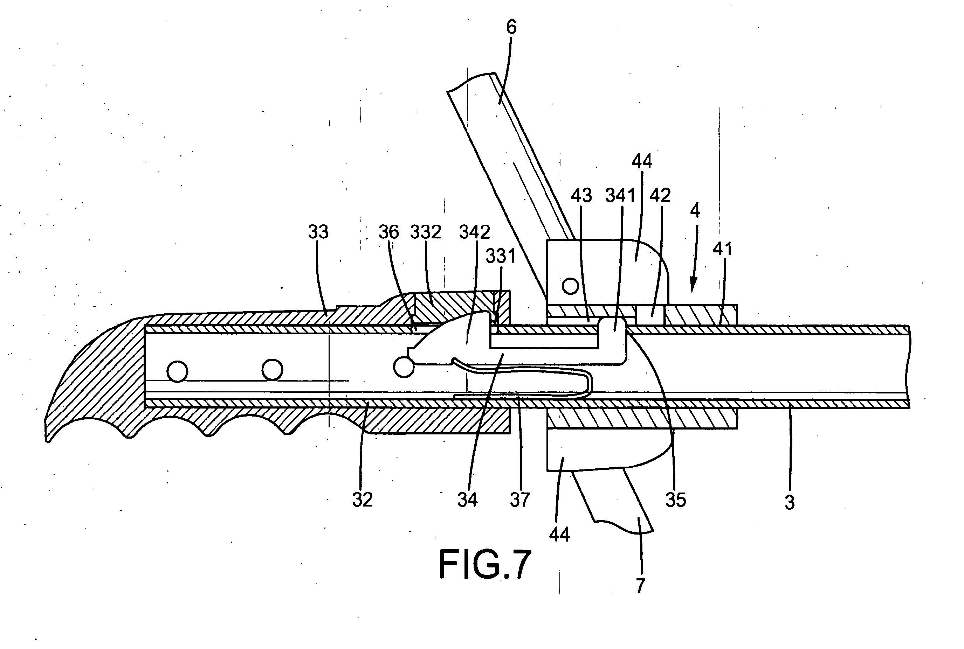

A sliding seat 4 is slideably mounted on the second end 32 of the central rod 3. In the preferred form shown, the sliding seat 4 includes a longitudinal hole 41 that slideably receives the central rod 3. The sliding seat 4 further includes a positioning hole 42 in a periphery thereof and in communication with and transverse to the longitudinal hole 41. The positioning hole 42 releasably receives the locking portion 341 of the locking member 34. Specifically, when the sliding seat 4 is in a position where the positioning hole 42 of the sliding seat 4 is aligned with the locking portion 341 of the locking member 34, the locking portion 341 of the locking member 34 is moved into the positioning hole 42 of the sliding seat 4 under the action of the spring 37, thereby engaging the sliding seat 4 with the central rod 3. The sliding seat 4 further includes a guiding groove 43 extending in a longitudinal direction parallel to the longitudinal hole 41 and in communication with the positioning hole 42. When the locking portion 341 of the locking member 34 is disengaged from the positioning hole 42, an end portion of the locking portion 341 can slide in the guiding groove 43 when the sliding seat 4 slides (see FIG. 7). The sliding seat 4 further includes four connecting portions 44 each having a compartment 45.

The foldable toy stroller 10 according to the preferred teachings of the present invention further includes a pair of struts 6 each including a lower end 62 pivotably received in the compartment 45 of one of the connecting portions 44. Each strut 6 further includes an upper end 61 pivotably connected to a coupler 17 mounted to the upper end 11 of one of the main beams 1. Each strut 6 is pivotable toward or away from the central rod 3 substantially in a plane parallel to the longitudinal axis of the central rod 3 to allow folding/unfolding operation.

The foldable toy stroller 10 according to the preferred teachings of the present invention further includes a pair of rear wheel support rods 5 each including a first end 51 pivotally received between a pair of lugs 240 on the coupler 24. Each rear wheel support rod 5 further includes a second end 52 to which a rear wheel 53 is mounted. A coupler 54 is mounted on the second end 52 of each rear wheel support rod 5 for pivotable connection with a first end 71 of a connecting rod 7 whose second end 72 is pivotably received in the compartment 45 of one of the connecting portions 44. Thus, the rear wheel support rods 5 may pivot toward or away from the central rod 3 to allow folding/unfolding operation. Similarly, the connecting rods 7 may pivot toward or away from the central rod 3 to allow folding/unfolding operation. Namely, each of the rear wheel support rods 5 and the connecting rods 7 is pivotable away from the central rod 3 for unfolding operation or toward the central rod 3 for folding operation.

When the foldable toy stroller 10 according to the preferred teachings of the present invention is in its extended state, the sliding seat 4 is in a position where the positioning hole 42 of the sliding seat 4 is aligned with the locking portion 341 of the locking member 34, the locking portion 341 of the locking member 34 is moved into the positioning hole 42 of the sliding seat 4 under the action of the spring 37, thereby fixing the sliding seat 4 on the central rod 3. Meanwhile, the struts 6 are at a small acute angle with a vertical plane orthogonal to the longitudinal axis of the central rod 3 to stretch the upper ends 11 of the main rods 1 upward whereas the links 15 are collinear to stretch the upper ends 11 of the main rods 1 outward. Furthermore, the connecting rods 7 are away from the central rod 3 and away from each other and, thus, stretch the rear wheel support rods 5 away from the central rod 3. The frame thus formed has a strong structure to assure safety.

When folding of the foldable toy stroller 10 according to the preferred teachings is required, the push button 332 on the handle 33 is pressed to disengage the locking portion 332 of the locking member 34 from the positioning hole 42 of the sliding seat 4, unlocking engagement between the central rod 3 and the sliding seat 4. Then the sliding seat 4 is slid toward the first end 31 of the central rod 3, which causes the lower ends 62 of the struts 6 and the second ends 72 of the connecting rods 7 move forward together with the sliding seat 4. Meanwhile, the struts 6 pivot downward to a position at a small acute angle with the longitudinal axis of the central rod 3. The connecting rods 7 and the rear wheel support rods 5 pivot toward the central rod 3. The outer ends of the links 15 pivot inward toward each other. Furthermore, the downward pivotal movements of the struts 6 cause the main rods 1 and the extension rods 22 to pivot inward toward each other about the pivot axes defined by the studs 216 and downward toward the central rod 3. Thus, both the width and the height of the folded stroller 10 according to the preferred teachings of the present invention are reduced with simple folding operation, allowing easy storage and transport.

The angle between the central rod 3 and the struts 6 in the extended state and the folded state may vary. Furthermore, the extending planes of the struts 6, the connecting rods 7, the rear wheel support rods 5, the extension rods 22, and the main rods 1 may vary according to product needs.

Thus since the invention disclosed herein may be embodied in other specific forms without departing from the spirit or general characteristics thereof, some of which forms have been indicated, the embodiments described herein are to be considered in all respects illustrative and not restrictive. The scope of the invention is to be indicated by the appended claims, rather than by the foregoing description, and all changes which come within the meaning and range of equivalency of the claims are intended to be embraced therein.

## Claims

1. A foldable toy stroller comprising:
two main rods (1) each including an upper end (11) and a lower end (12);
a front-wheel base (21) including two ends (215);
two extension rods (22) each including an upper end (222) mounted to the lower end (12) of one of the main rods (1) and a lower end (221) rotatably connected to one of the ends (215) of the front-wheel base (21);
a central rod (3) including a first end (31) connected to the front-wheel base (21) and a second end (32), a locking member (34) being mounted in the second end (32) of the central rod (3) and including a locking portion (341);
a sliding seat (4) slideably mounted on the central rod (3) and including a positioning hole (42) for receiving the locking portion (341) of the locking member (34);
two rear wheel support rods (5) each including a first end (51) pivotably connected to the front wheel base (21) and a second end (52) to which a rear wheel (53) is mounted;
two struts (6) each including an upper end (61) pivotably connected to the upper end (11) of one of the main rods (1) and a lower end (62) pivotably connected to the sliding seat (4); and
two connecting rods (7) each including a first end (71) pivotably connected to one of the rear wheel support rods (5) and a second end (72) pivotably connected to the sliding seat (4), with each of the rear wheel support rods (5) and the connecting rods (7) being pivotable away from the central rod (3) for unfolding the foldable toy stroller or toward the central rod (3) for folding the foldable toy stroller,
with the locking portion (341) of the locking member (34) being engaged in the positioning hole (42) of the sliding seat (4) when the foldable toy stroller is in an extended state, with the struts (6) being away from the central rod (3) and stretching the main rods (1) upward, and with the connecting rods (7) being away from the central rod (3) and stretching the rear wheel support rods (5) outward away from the central rod (3), and
with the sliding seat (4) being slidable on the central rod (3) when the locking portion (341) of the locking member (34) is disengaged from the positioning hole (42) of the sliding seat (4), allowing the main rods (1), the rear wheel support rods (5), the struts (6), and the connecting rods (7) to pivot toward the central rod (3) for folding the foldable toy stroller.

2. The foldable toy stroller as claimed in claim 1, further comprising, in combination: a coupler (14) mounted on the upper end (11) of each of the main rods (1); and two links (15) mounted between the main rods (1) and each including an inner end and an outer end, with the inner ends of the links (15) being pivotably connected together, and with the outer ends of the links (15) being respectively and pivotably connected to the couplers (14).

3. The foldable toy stroller as claimed in claim 1, with the sliding seat (4) further including four connecting portions (44) to which the lower ends (62) of the struts (6) and the second ends (72) of the connecting rods (7) are pivotably connected.

4. The foldable toy stroller as claimed in claim 1, with the sliding seat (4) including a longitudinal hole (41) that slideably receives the central rod (3), with the positioning hole (42) of the sliding seat (4) being in communication with and transverse to the longitudinal hole (41), with the sliding seat (4) further including a guiding groove (43) extending parallel to the longitudinal hole (41) and in communication with the positioning hole (42), and with the locking portion (341) being slideable in the guiding groove (43) when the sliding seat (4) is slideable on the central rod (3).

5. The foldable toy stroller as claimed in claim 1, the locking member (34) further including an engaging portion (342), with the central rod (3) including a first slot (35) in a periphery thereof through which the locking portion (341) of the locking member (34) extends, with the central rod (3) further including a second slot (36) in the periphery thereof through which the engaging portion (342) of the locking member (34) extends, with the foldable toy stroller further comprising, in combination: a handle (33) mounted to the second end (32) of the central rod (3) and including an engaging hole (331) for receiving the engaging portion (342) of the locking member (34); and a spring (37) mounted in the central rod (3) for biasing the locking portion (341) and the engaging portion (342) of the locking member (34) to respectively engage with the positioning hole (42) of the sliding seat (4) and the engaging hole (331) of the handle (31), with the handle (33) further including a push button (332) slideably received in the engaging hole (331) of the handle (33) and pressable to disengage the engaging portion (342) of the locking member (34) from the engaging hole (331) of the handle (33) and to disengage the locking portion (341) of the locking member (34) from the positioning hole (42) of the sliding seat (4) to allow sliding movement of the sliding seat (4) along the central rod (3).

6. The foldable toy stroller as claimed in claim 1, with the front-wheel base (21) including a vertical portion (212) extending downward from an intermediate portion between the ends (215) of the front-wheel base (21), with a front wheel (23) being attached to the vertical portion (212), with the front-wheel base (21) further including a horizontal portion (211) extending horizontally from the intermediate portion and including an end (213) to which a coupler (24) is mounted, and with first end (31) of the central rod (3) being coupled to the coupler (24).

7. The foldable toy stroller as claimed in claim 6, with each of the ends (215) of the front-wheel base (21) including a stud (216) extending outward from an end face thereof and at an acute angle with a longitudinal axis of the central rod (3), with the lower end (221) of each of the extension rods (22) including an eccentric hole (223) parallel to and spaced from a central portion thereof and rotatably receiving the lower end (221) of one of the extension rods (22), and with each of the studs (216) defining a rotating axis for the lower end (221) of one of the extension rods (22).

8. The foldable toy stroller as claimed in claim 6, with the coupler (24) including two pairs of lugs (240) on an outer periphery thereof, and with the front end (51) of each of the rear wheel support rods (5) being pivotably received between one of the pairs of lugs (240).

9. The foldable toy stroller as claimed in claim 6, with the sliding seat (4) including a longitudinal hole (41) that slideably receives the central rod (3), with the positioning hole (42) of the sliding seat (4) being in communication with and transverse to the longitudinal hole (41), with the sliding seat (4) further including a guiding groove (43) extending parallel to the longitudinal hole (41) and in communication with the positioning hole (42), and with the locking portion (341) being slideable in the guiding groove (43) when the sliding seat (4) is slideable on the central rod (3).

## Patentansprüche

1. Zusammenklappbarer Spielzeug-Kinderwagen mit :
• zwei Hauptstangen (1), jede mit einem oberen Ende (11) und einem unteren Ende (12);
• einem Vorderradstand (21) mit zwei Enden (215);
• zwei Verlängerungsstangen (22), jede mit einem oberen Ende (222), das an das untere Ende (12) einer der Hauptstangen (1) montiert ist, und einem unteren Ende (221), das drehbar verbunden mit einem der Enden (215) des Vorderradstandes (21) ist;
• einer mittleren Stange (3) mit einem ersten Ende (31), das mit dem Vorderradstand (21) verbunden ist, und einem zweiten Ende (32), ein Verschlusselement (34) ist an das zweite Ende (32) der mittleren Stange montiert und umfasst ein Verschlussteil (341);
• ein Schiebesitz (4) ist gleitend auf der mittleren Stange (3) montiert und umfasst ein Positionierloch (42) zur Aufnahme des Verschlussteils (341) des Verschlusselements (34);
• zwei Hinterradtragestangen (5) umfassen jede ein erstes Ende (51), das rotierbar mit dem Vorderradstand (21) verbunden ist, und ein zweites Ende (52), an das ein Hinterrad (53) montiert ist;
• zwei Federbeinen (6), jedes mit einem oberen Ende (61), das mit dem oberen Ende (11) einer der Hauptstangen drehbar verbunden ist, und einem unteren Ende (62), das mit dem Schiebesitz (4) drehbar verbunden ist; und
• zwei Verbindungsstangen (7), jede mit einem ersten Ende (71), das mit einer der Hinterradtragestangen (5) drehbar verbunden ist, und einem zweiten Ende (72), das mit der Gleitdichtung (4) drehbar verbunden ist, wobei jede der Hinterradtragestangen (5) und die Verbindungsstangen (7) von der mittleren Stange (3) wegdrehbar sind, um den zusammenklappbaren Spielzeug-Kinderwagen auseinanderzuklappen, oder hin zu der mittleren Stange (3), um den zusammenklappbaren Spielzeug-Kinderwagen zusammenzuklappen, wobei
das Verschlussteil (341) des Verschlusselements (34) in Eingriff mit dem Positionierloch (42) des Schiebesitzes (4) ist, wenn der zusammenklappbare Spielzeug-Kinderwagen in einem verlängerten Zustand ist, wobei die Federbeine (6) weg von der mittleren Stange (3) sind und die Hauptstangen (1) nach oben gestreckt, und die Verbindungsstangen (7) weg von der mittleren Stange (3) und die Hinterradtragestangen (5) nach außen gestreckt, weg von der mittleren Stange (3), und
der Schiebesitz (4) auf der mittleren Stange (3) gleitet, wenn das Verschlussteil (341) des Verschlusselements (34) aus dem Positionierungsloch (42) des Schiebesitzes (4) ausgekuppelt wird, so dass die Hauptstangen (1), die Hinterradtragestangen (5), die Federbeine (6), und die Verbindungsstangen (7) sich hin zu der mittleren Stange (3) drehen, um den zusammenklappbaren Spielzeug-Kinderwagen zusammenzuklappen.

2. Zusammenklappbarer Spielzeug-Kinderwagen nach Anspruch 1, des weiteren umfassend, in Kombination: ein Verbindungsstück (14), das an das obere Ende (11) jeder Hauptstange (1); montiert ist, und zwei Verbindungen (15) zwischen den Hauptstangen (1), jede mit einem inneren Ende und ein Außenende montiert, wobei die inneren Enden der Verbindungen (15) drehbar miteinander verbunden sind und die Außenenden der Verbindungen (15) jeweils mit den Verbindungsstücken (14) drehbar verbunden sind.

3. Zusammenklappbarer Spielzeug-Kinderwagen nach Anspruch 1, wobei der Schiebesitz (4) des weiteren vier Verbindungsteile (44) umfasst, mit denen die unteren Enden (62) der Federbeine (6) und die zweiten Enden (72) der Verbindungsstangen (7) drehbar verbunden sind.

4. Zusammenklappbarer Spielzeug-Kinderwagen nach Anspruch 1, wobei der Schiebesitz (4) ein Längsloch (41) umfasst, das gleitend die mittlere Stange (3) empfängt, wobei das Positionierungsloch (42) des Schiebesitzes (4) in Verbindung mit und quer zu dem Längsloch (41) ist, wobei der Schiebesitz (4) des weiteren eine Führungsnut (43) umfasst, die parallel zu dem Längsloch (41) verläuft und in Verbindung mit dem Positionierungsloch (42) steht, und wobei das Verschlussteil (341) in der Führungsnut (43) gleitet, wenn der Schiebesitz (4) auf der mittleren Stange (3) gleitet.

5. Zusammenklappbarer Spielzeug-Kinderwagen nach Anspruch 1, wobei das Verschlusselement (34) des weiteren ein Eingriffsteil (342) umfasst, wobei die mittlere Stange (3) einen ersten Schlitz (35) umfasst, in deren Rand, durch den sich das Verschlussteil (341) des Verschlusselements (34) erstreckt, wobei die mittleren Stange (3) des weiteren einen zweiten Schlitz (36) in deren Rand umfasst, durch den sich das Eingriffsteil (342) des Verschlusselements (34) erstreckt, wobei der zusammenklappbare Spielzeug-Kinderwagen des weiteren umfasst, in Kombination : einen Griff (33), der an das zweite Ende (32) der mittleren Stange (3) montiert ist, mit einem Eingriffsloch (331) zur Aufnahme des Eingriffsteils (342) des Verschlusselements (34); und eine Feder (37) in der mittleren Stange (3) zur Spannung des Verschlussteils (341) und des Eingriffsteils (342) des Verschlusselements (34), um in das Positionierungsloch (42) des Schiebesitzes (4) bzw. das Eingriffsloch (331) des Griffes (31) einzugreifen, wobei der Griff (33) des weiteren einen Druckknopf (332) umfasst, der in das Eingriffsloch (331) des Griffs (33) gleitet und drückbar ist, um das Eingriffsteil (342) des Verschlusselements (34) aus dem Eingriffsloch (331) des Griffs (33) auszukuppeln, wie auch das Verschlussteil (341) des Verschlusselements (34) aus dem Positionierungsloch (42) des Schiebesitzes (4), um die Gleitbewegung des Schiebesitzes (4) entlang der mittleren Stange (3) zu gestatten.

6. Zusammenklappbarer Spielzeug-Kinderwagen nach Anspruch 1, wobei der Vorderradstand (21) ein senkrechtes Teilstück (212) umfasst, das von einem Zwischenteil zwischen den Enden (215) des Vorderradstandes (21) nach unten verläuft, wobei ein Vorderrad (23) an dem senkrechten Teilstück (212) befestigt ist, wobei der Vorderradstand (21) des weiteren ein waagrechtes Teilstück (211) umfasst, das von dem Zwischenteil aus horizontal verläuft, mit einem Ende (213), an das ein Verbindungsstück (24) montiert ist, wobei das erste Ende (31) der mittleren Stange (3) mit dem Verbindungsstück (24) verbunden ist.

7. Zusammenklappbarer Spielzeug-Kinderwagen nach Anspruch 6, wobei jedes der Enden (215) des Vorderradstandes (21) einen Stift (216) umfasst, der von einer von dessen Endseiten nach außen verläuft und in spitzem Winkel zu einer Längsachse der mittleren Stange (3), wobei das untere Ende (221) jeder der Verlängerungsstangen (22) ein exzentrisches Loch (223) umfasst, parallel zu und beabstandet von einem Mittelteil davon, das drehbar das untere Ende (221) einer der Verlängerungsstangen (22) aufnimmt, und wobei jeder der Stifte (216) eine Rotationsachse für das untere Ende (221) einer der Verlängerungsstangen (22) bezeichnen.

8. Zusammenklappbarer Spielzeug-Kinderwagen nach Anspruch 6, wobei das Verbindungsstück (24) zwei Zuggriff-Paare (240) an dessen Rand umfasst, wobei das vordere Ende (51) jeder Hinterradtragestange (5) drehbar zwischen einem der Zuggriff-Paare (240) aufgenommen ist.

9. Zusammenklappbarer Spielzeug-Kinderwagen nach Anspruch 6, wobei der Schiebesitz (4) ein Längsloch (41) umfasst, das die mittlere Stange (3) gleitend aufnimmt, wobei das Positionierungsloch (42) des Schiebesitzes (4) in Verbindung mit und quer zu dem Längsloch (41) ist, wobei der Schiebesitz (4) des weiteren eine Führungsnut (43) umfasst, die parallel zu dem Längsloch (41) verläuft und in Verbindung mit dem Positionierungsloch (42) steht, wobei das Verschlussteil (341) in der Führungsnut (43) gleitet, wenn der Schiebesitz (4) auf der mittleren Stange (3) gleitet.

## Revendications

1. Poussette pliable en jouet comprenant :
• deux tiges principales (1) présentant chacune une extrémité supérieure (11) et une extrémité inférieure (12) ;
• une base pour roue avant (21) présentant deux extrémités (215) ;
• deux tiges de prolongation (22) comprenant chacune une extrémité supérieure (222) montée sur l'extrémité inférieure (12) d'une des tiges principales (1) et une extrémité inférieure (221) raccordée à pivotement à une des extrémités (215) de la base pour roue avant (21) ;
• une tige centrale (3) présentant une première extrémité (31) reliée à la base pour roue avant (21) et une seconde extrémité (32), un élément de verrouillage (34) monté dans la seconde extrémité (32) de la tige centrale (3) et comportant une partie de verrouillage (341) ;
• un siège coulissant (4) monté coulissant sur la tige centrale (3) et présentant un orifice de positionnement (42) pour recevoir la partie de verrouillage (341) de l'élément de verrouillage (34) ;
• deux tiges de support pour roue arrière (5) présentant chacune une première extrémité (51) raccordée à pivotement à la base pour roue avant (21) et une seconde extrémité (52) sur laquelle une roue arrière (53) est montée ;
• deux entretoises (6) présentant chacune une extrémité supérieure (61) raccordée à pivotement à l'extrémité supérieure (11) d'une des tiges principales (1) et une extrémité inférieure (62) raccordée à pivotement au siège coulissant (4) ; et
• deux tiges de jonction (7) présentant chacune une première extrémité (71) raccordée à pivotement à une des tiges de support pour roue arrière (5) et une seconde extrémité (72) raccordée à pivotement au siège coulissant (4), chacune des tiges de support pour roue arrière (5) et des tiges de jonction (7) pouvant être pivotée en éloignement de la tige centrale (3) pour déployer la poussette pliable en jouet ou vers la tige centrale (3) pour replier la poussette pliable en jouet,
la partie de verrouillage (341) de l'élément de verrouillage (34) étant engagée dans l'orifice de positionnement (42) du siège coulissant (4) lorsque la poussette pliable en jouet est à l'état déployé, les entretoises (6) étant éloignées de la tige centrale (3) et tendant les tiges principales (1) vers le haut, et les tiges de jonction (7) étant éloignées de la tige centrale (3) et tendant les tiges de support pour roue arrière (5) vers l'extérieur en éloignement de la tige centrale (3), et le siège coulissant (4) pouvant coulisser sur la tige centrale (3) lorsque la partie de verrouillage (341) de l'élément de verrouillage (34) est désengagée de l'orifice de positionnement (42) du siège coulissant (4), permettant aux tiges principales (1), aux tiges de support pour roue arrière (5), aux entretoises (6) et aux tiges de jonction (7) de pivoter vers la tige centrale (3) pour replier la poussette pliable en jouet.

2. Poussette pliable en jouet selon la revendication 1, comportant en outre, en association : un dispositif d'accouplement (14) monté sur l'extrémité supérieure (11) de chacune des tiges principales (1) ; et deux liaisons (15) montées entre les tiges principales (1) et présentant chacune une extrémité interne et une extrémité externe, les extrémités internes des liaisons (15) étant reliées entre elles à pivotement, et les extrémités externes des liaisons (15) étant reliées respectivement à pivotement aux dispositif d'accouplements (14).

3. Poussette pliable en jouet selon la revendication 1, le siège coulissant (4) comprenant en outre quatre parties de jonction (44) auxquelles les extrémités inférieures (62) des entretoises (6) et les secondes extrémités (72) des tiges de jonction (7) sont raccordées à pivotement.

4. Poussette pliable en jouet selon la revendication 1, le siège coulissant (4) comprenant un orifice longitudinal (41) qui reçoit la tige centrale (3) à coulissement, l'orifice de positionnement (42) du siège coulissant (4) étant en communication et transversal à l'orifice longitudinal (41), le siège coulissant (4) comprenant en outre une gorge de guidage (43) s'étendant parallèle à l'orifice longitudinal (41) et en communication avec l'orifice de positionnement (42), et la partie de verrouillage (341) pouvant coulisser dans la gorge de guidage (43) lorsque le siège coulissant (4) coulisse sur la tige centrale (3).

5. Poussette pliable en jouet selon la revendication 1, l'élément de verrouillage (34) comprenant en outre une partie d'engagement (342), la tige centrale (3) comprenant une première fente (35) sur le pourtour de celle-ci à travers laquelle s'étend la partie de verrouillage (341) de l'élément de verrouillage (34), la tige centrale (3) comprenant en outre une seconde fente (36) sur le pourtour de celle-ci à travers laquelle s'étend la partie d'engagement (342) de l'élément de verrouillage (34), la poussette pliable en jouet comportant en outre, en association : une poignée (33) montée sur la seconde extrémité (32) de la tige centrale (3) et présentant un orifice d'engagement (331) pour recevoir la partie d'engagement (342) de l'élément de verrouillage (34), et un ressort (37) monté dans la tige centrale (3) pour pousser la partie de verrouillage (341) et la partie d'engagement (342) de l'élément de verrouillage (34) et respectivement s'engager dans l'orifice de positionnement (42) du siège coulissant (4) et dans l'orifice d'engagement (331) de la poignée (31), la poignée (33) comprenant en outre un bouton-poussoir (332) reçu à coulissement dans l'orifice d'engagement (331) de la poignée (33) et pouvant être appuyé pour désengager la partie d'engagement (342) de l'élément de verrouillage (34) hors de l'orifice d'engagement (331) de la poignée (33) et pour désengager la partie de verrouillage (341) de l'élément de verrouillage (34) hors de l'orifice de positionnement (42) du siège coulissant (4) pour autoriser le coulissement du siège coulissant (4) le long de la tige centrale (3).

6. Poussette pliable en jouet selon la revendication 1, la base pour roue avant (21) comprenant une partie verticale (212) s'étendant vers le bas à partir d'une partie intermédiaire entre les extrémités (215) de la base pour roue avant (21), une roue avant (23) étant fixée à la partie verticale (212), la base pour roue avant (21) comprenant en outre une partie horizontale (211) qui s'étend de manière horizontale à partir de la partie intermédiaire et présentant une extrémité (213) sur laquelle un dispositif d'accouplement (24) est monté, et la première extrémité (31) de la tige centrale (3) étant accouplée au dispositif d'accouplement (24).

7. Poussette pliable en jouet selon la revendication 6, chacune des extrémités (215) de la base pour roue avant (21) comprenant un goujon (216) s'étendant vers l'extérieur depuis une face d'extrémité de celle-ci et selon un angle aigu avec l'axe longitudinal de la tige centrale (3), l'extrémité inférieure (221) de chacune des tiges de prolongation (22) présentant un orifice excentrique (223) parallèle à et distant d'une partie centrale de celles-ci et recevant à rotation l'extrémité inférieure (221) d'une des tiges de prolongation (22), et chacun des goujons (216) définissant un axe de pivotement pour l'extrémité inférieure (221) d'une des tiges de prolongation (22).

8. Poussette pliable en jouet selon la revendication 6, le dispositif d'accouplement (24) comprenant deux paires de pattes (240) sur le pourtour externe de celui-ci, et l'extrémité avant (51) de chacune des tiges de support pour roue arrière (5) étant reçues à pivotement entre une des paires de pattes (240).

9. Poussette pliable en jouet selon la revendication 6, le siège coulissant (4) comprenant un orifice longitudinal (41) qui reçoit la tige centrale (3) en coulissement, l'orifice de positionnement (42) du siège coulissant (4) étant en communication et transversal à l'orifice longitudinal (41), le siège coulissant (4) comprenant en outre une gorge de guidage (43) s'étendant parallèle à l'orifice longitudinal (41) et en communication avec l'orifice de positionnement (42), et la partie de verrouillage (341) pouvant coulisser dans la gorge de guidage (43) lorsque le siège coulissant (4) peut coulisser sur la tige centrale (3).
